# EUROPEAN PATENT APPLICATION

(11) **EP 3 253 137 A1**
(43) Date of publication of application: **06.12.2017**
(21) Application number: 15879712.6
(22) Date of filing: 23.11.2015
(51) Int. Cl.: H04W 52/36

(54) **METHOD AND DEVICE FOR REPORTING POWER HEADROOM REPORT, AND STORAGE MEDIUM**

(30) Priority: 28.01.2015 CN 201510045248
(71) Applicant: ZTE Corporation, Shenzhen city, Guangdong 518057 (CN)
(72) Inventor: HUANG, He, Shenzhen Guangdong 518057 (CN); DU, Zhongda, Shenzhen Guangdong 518057 (CN); YU, Yuanfang, Shenzhen Guangdong 518057 (CN)
(74) Representative: Deambrogi, Edgardo
(86) International application number: PCT/CN2015/095335
(87) International publication number: WO 2016/119514

(57) **Abstract**

A method for providing a Power Headroom Report (PHR) is provided. In the method, a User Equipment (UE) receives configuration information of serving cells; a corresponding relationship between a first region of a PHR and the serving cells is determined according to the configuration information of the serving cells, and the first region is used for indicating whether power headroom information of one or more serving cells is contained in the PHR. Another method for providing the PHR, two devices for providing the PHR, and a computer storage medium are also provided.

## Description

### Technical Field

The disclosure relates to the technical field of communications, in particular to methods and devices for providing a Power Headroom Report (PHR), and a storage medium.

### Background

With development of communication technologies, popularization of intelligent terminals, and emergence of a large number of network applications, broadband mobile communications centering on data services become an inevitable trend of future development of mobile communications. The rapid development of data services puts forward higher requirements on a peak data transfer rate and bandwidth, so a communication system is required to provide a larger communication bandwidth. For example, in order to satisfy the requirements on a downlink peak rate and an uplink peak rate of a Long Term Evolution (LTE) system, e.g., the downlink peak rate of 1Gbps/s and the uplink peak rate of 500Mbps/s, the communication system may need to provide a transmission bandwidth up to 100MHz. For the scarcity of high-bandwidth continuous spectrum, the 3rd Generation Partner Project (3GPP) presented a solution, namely Carrier Aggregation (CA), at the stage of Release 10 (R10), and further enhanced the CA at the stages of R11 and R12. The spectrums for the mobile communications scatter over 800MHz, 900MHz, 1800MHz, 2400MHz and 2600MH, and these scattering spectrums may be aggregated into a large communication bandwidth through the CA technology, thereby increasing flexibility of spectrum application and improving utilization rate of spectrum. The CA technology is a core technology for ensuring that the LTE system can satisfy the requirement on the peak data transfer rate and the bandwidth requirement.

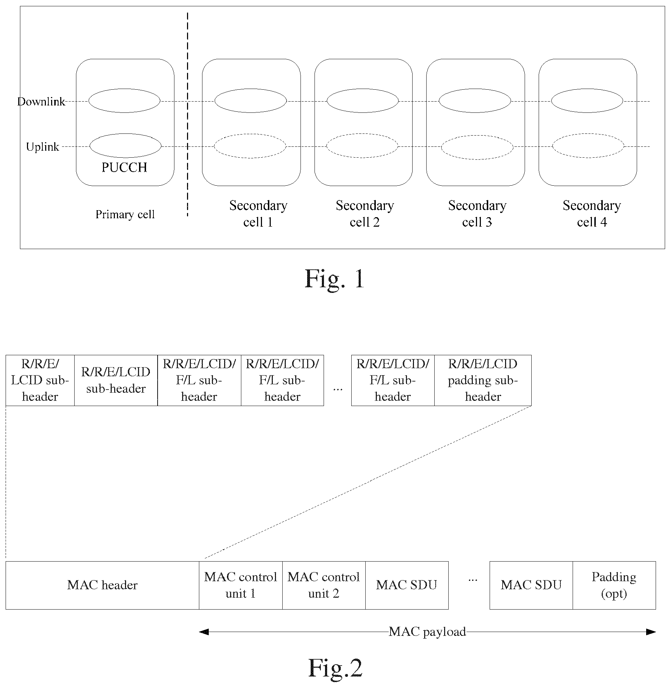

At the stages of R8 and R9 of the 3GPP, a CA User Equipment (UE) has only one serving cell, and may receive and send data on only one carrier. At the stage of R10 of the 3GPP, the CA UE may have a maximum of 5 serving cells, and may receive and send data on 5 carriers simultaneously. The 5 serving cells includes 1 Primary Cell (PCell) and 4 Secondary Cells (SCell). The PCell is a cell where the UE access initially, and takes charge of a Radio Resource Control (RRC) communication with the UE. The SCell is added in a process of reconfiguration of RRC, and is used for providing extra radio resources. Structures of the PCell and the SCell under the CA are shown in Fig. 1. The PCell has an uplink carrier and a downlink carrier. The SCell may only have the downlink carrier, but cannot have the uplink carrier only. A Physical Uplink Control Channel (PUCCH) may only be sent on the PCell. Control information transmitted in the PUCCH includes: an uplink resource scheduling request, an ACK/NACK feedback of downlink data, and channel quality indication information. With the increasing number of UE having a CA capability, the load of the PCell carrying the PUCCH will increase significantly, thereby degrading the performance of communication system and reducing user experience.

At the stage of R13 of the 3GPP, the maximum number of aggregated carriers that the LTE system can support may increase to 32, namely 1 PCell and 31 Scells. In existing standards, for enabling an evolved Node B (eNB) to have a better knowledge of the remaining power of the UE side in the process of performing uplink resource scheduling, a protocol defines a process of reporting a power headroom. The power headroom is reported to provide to the eNB difference information between the maximum transmission power of the UE and an estimation value of the current Uplink-Synchronous Channel (UL-SCH) transmission power. A PHR is carried by a Medium Access Control (MAC) control element, and is contained in an MAC Power Distribution Unit (PDU) to be sent to the eNB.

A first region of the PHR is used for indicating whether power headroom information of a cell whose serving cell Identity (ID) or SCell index is i is contained in the PHR. The first region may start from the first bit in the PHR. If a value of the first region is 1, the power headroom information of the cell whose SCell index is i is contained in the PHR; and if the value of the first region is 0, the power headroom information of the cell whose SCell index is i does not exist in the PHR.

In the protocol before the stage of R12 of the 3GPP, the maximum number of the serving cells that the UE supports is 5, but at the stage of R13 of the 3GPP, the maximum number of the serving cells that the UE supports is increased to 32. If the first region is still used for indicating whether power headroom of the serving cell is contained in the PHR, 32 bits are needed, thereby increasing the number of bits of the first region of the PHR.

### Summary

Some embodiments of the disclosure provide methods and devices for providing a PHR, and a storage medium, which can save a length of a first region of a PHR.

The technical solutions of the embodiments of the disclosure are implemented as follows.

A method for providing a PHR is provided, which may include the following acts. A UE receives configuration information of serving cells. A corresponding relationship between a first region of a PHR and the serving cells is determined according to the configuration information of the serving cells, and the first region is used for indicating whether power headroom information of one or more serving cells is contained in the PHR.

In an embodiment, each bit in the first region is used for indicating whether power headroom information of one serving cell is contained in the PHR; and a total number of bits of the first region is less than a maximum number of serving cells which are able to be simultaneously configured by the UE.

In an embodiment, before the corresponding relationship between the first region of the PHR and the serving cells is determined, the method may further include the following act. At least one serving cell of which power headroom information has to be reported is determined. Correspondingly, after the at least one serving cell of which the power headroom information has to be reported is determined, the first region does not carry the power headroom information of the at least one serving cell of which the power headroom information has to be reported.

In an embodiment, the configuration information of the serving cells may be carried in an RRC message. Correspondingly, the act that the at least one serving cell of which the power headroom information has to be reported is determined may include any one of the following acts. The at least one serving cell of which the power headroom information has to be reported is determined according to the RRC message. According to the configuration information of the serving cells, a serving cell configured with a PUCCH is determined as a serving cell of which the power headroom information has to be reported. According to the configuration information of the serving cells, a serving cell that cannot be deactivated and has uplink resource configuration is determined as a serving cell of which the power headroom information has to be reported. The at least one serving cell of which the power headroom information has to be reported is determined according to 3GPP 36-series protocol agreements.

In an embodiment, uplink resource configuration may include any one or any combination of parameters including: relevant parameters of a Physical Uplink Shared Channel (PUSCH), relevant parameters of uplink power control, relevant parameters of a sounding Reference Signal (RS), relevant parameters reported by a Channel Quality Indicator (CQI) and relevant parameters of the PUCCH.

In an embodiment, the act that the corresponding relationship between the first region of the PHR and the serving cells is determined according to the configuration information of the serving cells may include the following acts. A mapping mode between the first region of the PHR and the serving cells is determined according to the configuration information of the serving cells. The corresponding relationship between the first region of the PHR and the serving cells is determined according to the determined mapping mode.

In an embodiment, the act that the mapping mode between the first region of the PHR and the serving cells is determined according to the configuration information of the serving cells may include any one of the following acts. The mapping mode between the first region of the PHR and the serving cells is determined according to explicit indication information in the configuration information of the serving cells. The mapping mode between the first region of the PHR and the serving cells is determined according to a relationship between a first threshold and the number of the serving cells configured in the configuration information of the serving cells. The mapping mode between the first region of the PHR and the serving cells is determined according to a relationship between a second threshold and the number of serving cells having an uplink resource and configured in the configuration information of the serving cells.

In an embodiment, the PHR is also used for indicating at least one of: a mapping mode between the first region of the PHR and the serving cells; whether a mapping mode between the first region of the PHR and the serving cells changes.

A device for providing a PHR is also provided, which includes: a first receiving module and a first determining module.

The first receiving module is configured to receive configuration information of serving cells supported by a UE.

The first determining module is configured to determine a corresponding relationship between a first region of a PHR and the serving cells according to the configuration information of the serving cells, and the first region is used for indicating whether power headroom information of one or more serving cells is contained in the PHR.

In an embodiment, each bit in the first region is used for indicating whether power headroom information of one serving cell is contained in the PHR; a total number of bits of the first region is less than a maximum number of serving cells which are able to be simultaneously configured by the UE.

In an embodiment, the device may further include a second determining module. The second determining module is configured to determine at least one serving cell of which power headroom information has to be reported. Correspondingly, after the at least one serving cell of which the power headroom information has to be reported is determined, the first region does not carry the power headroom information of the at least one serving cell of which the power headroom information has to be reported.

In an embodiment, the configuration information of the serving cells may be carried in an RRC message. Correspondingly, the second determining module may be configured to determine the at least one serving cell of which the power headroom information has to be reported according to the RRC message. In an alternative embodiment, the second determining module may be configured to determine, according to the configuration information of the serving cells, a serving cell configured with a PUCCH to be a serving cell of which the power headroom information has to be reported. In another alternative embodiment, the second determining module may be configured to determine, according to the configuration information of the serving cells, a serving cell that cannot be deactivated and has uplink resource configuration to be a serving cell of which the power headroom information has to be reported. In still another alternative embodiment, the second determining module may be configured to determine the at least one serving cell of which the power headroom information has to be reported according to 3GPP 36-series protocol agreements.

In an embodiment, the uplink resource configuration may include any one or any combination of parameters including: the relevant parameters of the PUSCH, the relevant parameters of uplink power control, the relevant parameters of the sounding RS, the relevant parameters reported by the CQI and the relevant parameters of the PUCCH.

In an embodiment, the first determining module may be configured to determine a mapping mode between the first region of the PHR and the serving cells according to the configuration information of the serving cells, and determine the corresponding relationship between the first region of the PHR and the serving cells according to the determined mapping mode.

In an embodiment, the first determining module may be configured to determine the mapping mode between the first region of the PHR and the serving cells according to explicit indication information in the configuration information of the serving cells. In an alternative embodiment, the first determining module may be configured to determine the mapping mode between the first region of the PHR and the serving cells according to a relationship between a first threshold and the number of the serving cells configured in the configuration information of the serving cells. In another alternative embodiment, the first determining module may be configured to determine the mapping mode between the first region of the PHR and the serving cells according to the relationship between a second threshold and the number of serving cells having an uplink resource and configured in the configuration information of the serving cells.

In an embodiment, the PHR is also used for indicating at least one of: a mapping mode between the first region of the PHR and the serving cells; whether a mapping mode between the first region of the PHR and the serving cells changes.

Another method for providing a PHR is also provided, which may include the following acts. A UE receives configuration information of serving cells. A length of a first region of a PHR is determined according to the configuration information of the serving cells, and the first region is used for indicating whether power headroom information of one or more serving cells is contained in the PHR.

In an embodiment, the act that the length of the first region of the PHR is determined according to the configuration information of the serving cells may include any one of the following acts. The length of the first region of the PHR is determined according to indication information in the configuration information of the serving cells. The length of the first region of the PHR is determined according to the number of secondary serving cells having an uplink resource and configured in the configuration information of the serving cells.

Another device for providing a PHR is also provided, which includes: a second receiving module and a third determining module.

The second receiving module is configured to receive configuration information of serving cells supported by a UE.

The third determining module is configured to determine a length of a first region of a PHR according to the configuration information of the serving cells, and the first region is used for indicating whether power headroom information of one or more serving cells is contained in the PHR.

In an embodiment, the third determining module may be configured to determine the length of the first region of the PHR according to indication information in the configuration information of the serving cells. In an alternative embodiment, the third determining module may be configured to determine the length of the first region of the PHR according to the number of secondary serving cells having an uplink resource and configured in the configuration information of the serving cells.

A computer storage medium is also provided, in which a computer executable instruction is stored. The computer executable instruction is used for performing the method for providing a PHR.

According to the methods and devices for providing a PHR, and a storage medium provided in some embodiments of the disclosure, configuration information of serving cells supported by a UE is received, a corresponding relationship between a first region of a PHR and the serving cells is determined according to the configuration information of the serving cells, and the first region is used for indicating whether power headroom information of one or more serving cells is contained in the PHR. In such a manner, at least one serving cell of which power headroom information has to be reported is determined according to an RRC message carrying the configuration information of the serving cells supported by the UE, and the first region of the PHR does not carry the power headroom information of the at least one serving cell of which the power headroom information has to be reported, thereby saving the length of the first region of the PHR.

### Brief Description of the Drawings

Fig. 1 is a structure diagram of a PCell and a SCell under CA according to an embodiment of the disclosure;
Fig. 2 is a diagram showing a format of an MAC PDU instance according to an embodiment of the disclosure;
Fig. 3 is a diagram showing a reporting format a dual connectivity PHR according to an embodiment of the disclosure;
Fig. 4 is a diagram showing a reporting format an extended PHR according to an embodiment of the disclosure;
Fig. 5 is a basic processing flowchart of a method for providing a PHR according to an embodiment of the disclosure;
Fig. 6 is a basic schematic diagram of a method for providing a PHR according to another embodiment of the disclosure;
Fig. 7 is a detailed processing flowchart of a method for providing a PHR according to a first embodiment of the disclosure;
Fig. 8 is a detailed processing flowchart of a method for providing a PHR according to a second embodiment of the disclosure;
Fig. 9 is a detailed processing flowchart of a method for providing a PHR according to a third embodiment of the disclosure;
Fig. 10 is diagram showing a format of a PHR according to a third embodiment of the disclosure;
Fig. 11 is a detailed processing flowchart of a method for providing a PHR according to a fourth embodiment of the disclosure;
Fig. 12 is a detailed processing flowchart of a method for providing a PHR according to a fifth embodiment of the disclosure;
Fig. 13 is a diagram showing a format of a PHR according to a fifth embodiment of the disclosure;
Fig. 14 is a structure diagram of a device for providing a PHR according to an embodiment of the disclosure; and
Fig. 15 is a structure diagram of a device for providing a PHR according to another embodiment of the disclosure.

### Detailed Description of the Embodiments

For understanding the technical solutions of the disclosure better, the format and content of the PHR in the related technology is introduced in detail below.

In the related technology, the PHR is carried by an MAC control element, and is contained in an MAC PDU to be sent to the eNB. As shown in Fig. 2, the format of the MAC PDU instance includes an MAC header, MAC control elements, MAC SDUs and padding. The content contained in each MAC control element is indicated by a Logical Channel Identity (LCH ID) in the MAC header. The values of the LCH ID are shown in Table 1.

**Table 1**

| Index number | Values of LCH ID |
|---|---|
| 00000 | Common Control Channel (CCCH) |
| 00001-01010 | Identity of the logical channel |
| 01011-10111 | Reserved |
| 11000 | Dual connectivity PHR |
| 11001 | Extended PHR |
| 11010 | PHR |
| 11011 | C-RNTI |
| 11100 | Truncated BSR |
| 11101 | Short BSR |
| 11110 | Long BSR |
| 11111 | Padding |

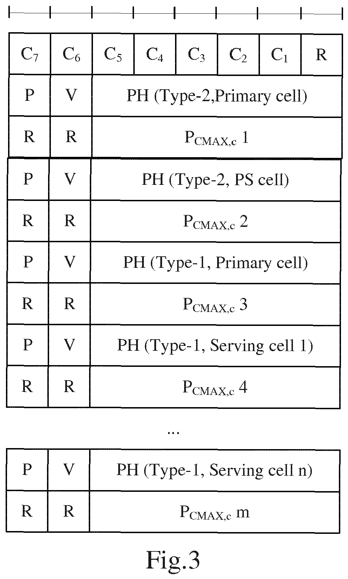

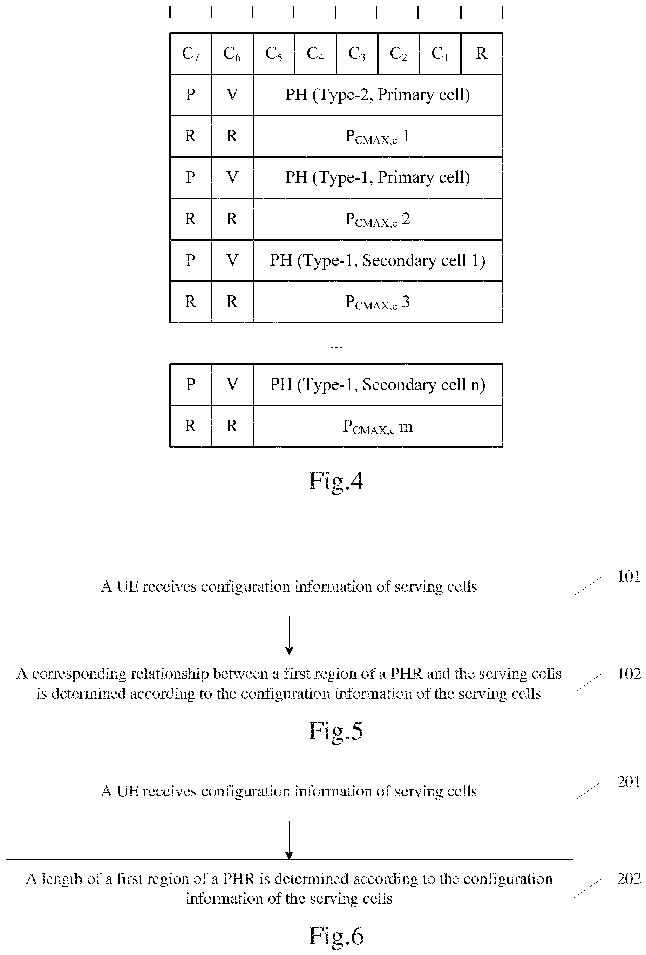

At present, the formats of the PHR which reports the power headroom information of multiple carriers simultaneously include mainly dual connectivity PHR and the extended PHR, respectively corresponding to the LCH index numbers 11000 and 11001. The reporting format of the dual connectivity PHR is shown in Fig. 3, and the reporting format of the extended PHR is shown in Fig. 4. The first region of the two reporting formats is used for indicating whether the power headroom information of the cell whose SCell index is i is contained in the PHR. If the value of the first region is 1, the power headroom information of the cell whose SCell index is i is contained in the PHR. If the value of the first region is 0, the power headroom information of the cell whose SCell index is i does not exist in the PHR. The first region may start from the first bit in the two reporting formats.

In the embodiment of the disclosure, configuration information of serving cells supported by a UE is received; and a corresponding relationship between the first region of the PHR and the serving cells is determined according to the configuration information of the serving cells, and the first region is used for indicating whether power headroom information of one or more serving cells is contained in the PHR.

As shown in Fig. 5, the basic processing flow of a method for providing a PHR in an embodiment of the disclosure includes the following acts.

At act S101, a UE receives configuration information of serving cells.

Specifically, the UE receives and saves the configuration information of the serving cells supported by the UE. The configuration information of the serving cells may be sent by an eNB and may be carried in an RRC message.

At act S102, a corresponding relationship between a first region of a PHR and the serving cells is determined according to the configuration information of the serving cells.

Specifically, the UE first determines a mapping mode between the first region of the PHR and the serving cells according to the configuration information of the serving cells, and then determines the corresponding relationship between the first region of the PHR and the serving cells according to the determined mapping mode. Before the corresponding relationship between the first region of the PHR and the serving cells is determined, the UE may also determine at least one serving cell of which power headroom information has to be reported. After the UE determines that there is at least one serving cell of which power headroom information has to be reported, the first region does not carry the power headroom information of the at least one serving cell of which the power headroom information has to be reported.

Here, according to the configuration information of the serving cells, a serving cell configured with a PUCCH may be determined as a serving cell of which power headroom information has to be reported. Alternatively, according to the configuration information of the serving cells, a serving cell that cannot be deactivated and has uplink resource configuration may be determined as a serving cell of which power headroom information has to be reported. Alternatively, the at least one serving cell of which the power headroom information has to be reported may be determined according to 3GPP 36-series protocol agreements. The uplink resource configuration may include any one or any combination of parameters including: relevant parameters of the PUSCH, relevant parameters of uplink power control, relevant parameters of the sounding RRS, relevant parameters reported by the CQI and relevant parameters of the PUCCH.

The act that the UE determines the mapping mode between the first region of the PHR and the serving cells according to the configuration information of the serving cells specifically may include any one of the following acts. As a first alternative, the UE determines the mapping mode between the first region of the PHR and the serving cells according to explicit indication information in the configuration information of the serving cells. As a second alternative, the UE determines the mapping mode between the first region of the PHR and the serving cells according to a relationship between a first threshold and the number of the serving cells configured in the configuration information of the serving cells. As a third alternative, the UE determines the mapping mode between the first region of the PHR and the serving cells according to a relationship between a second threshold and the number of serving cells having an uplink resource and configured in the configuration information of the serving cells.

The first region may be located starting from the first bit in the PHR, and is used for indicating whether power headroom information of one or more serving cells is contained in the PHR. Each bit in the first region is used for indicating whether power headroom information of one serving cell is contained in the PHR, and a total number of bits of the first region is less than a maximum number of serving cells which are able to be simultaneously configured by the UE. A length of the first region, namely the total number of bits of the first region, may be a fixed length, or may change according to the number of serving cells having an uplink resource and configured by the UE, or may be configured by the eNB and notified to the UE through the RRC message.

In the embodiment of the disclosure, there are two mapping modes between the first region of the PHR and the serving cells. One is the traditional mapping mode, that is, the bits in the first region correspond to all the SCells one by one. The other is the new mapping mode in the embodiment of the disclosure, namely a mapping mode, in which there is a corresponding relationship between the bits in the first region and a part of serving cells, determined according to the number of the serving cells actually configured. The mapping mode determined according to the number of the serving cells actually configured may be embodied as follows. For example, when the explicit indication information in the configuration information of the serving cells is the new mapping mode, the mapping mode between the first region of the PHR and the serving cells is determined to adopt the new mapping mode; or, when the number of the serving cells configured in the configuration information of the serving cells is greater than a first threshold, the mapping mode between the first region of the PHR and the serving cells is determined to adopt the new mapping mode; or, when the number of serving cells having an uplink resource and configured in the configuration information of the serving cells is greater than a second threshold, the mapping mode between the first region of the PHR and the serving cells is determined to adopt the new mapping mode. Because the maximum number of the cells that the existing protocol can support is 7, the first threshold and the second threshold may be set as 7. If the value of a bit in the first region is 0, it represents that the headroom report of the serving cell corresponding to the bit does not exist in the PHR; if the value of a bit in the first region is 1, it represents that the power headroom information of the serving cell corresponding to the bit is contained in the PHR. Whether the power headroom information of each serving cell is contained in the PHR may be indicated for the serving cells corresponding to the bits in the first region according to an ascending order or a descending order of the SCell index.

In the embodiment of the disclosure, a bit in the PHR may be used for indicating the mapping mode between the first region of the PHR and the serving cells. For example, when the bit value is 0, the mapping mode is the traditional mapping mode; and when the bit value is 1, the mapping mode is the new mapping mode. The bit may be a bit reserved in the PHR or a bit newly introduced. Another bit in the PHR may be used for indicating whether the mapping mode between the first region of the PHR and the serving cells changes. For example, when the value of this bit is 0, the mapping mode does not change; and when the value of another bit is 1, the mapping mode changes. The PHR of the traditional mapping mode and the PHR of the new mapping mode may use different LCH IDs. The above bit for indicating whether the mapping mode between the first region of the PHR and the serving cells changes may be a bit reserved in the PHR or a bit newly introduced. When the value of the bit for indicating whether the mapping mode between the first region of the PHR and the serving cells changes, it represents that the mapping mode changes, then the bit value indicating the mapping mode between the first region of the PHR and the serving cells is modified into the bit value corresponding to the changed mapping mode. Here, the bit for indicating the mapping mode between the first region of the PHR and the serving cells and the bit for indicating whether the mapping mode between the first region of the PHR and the serving cells changes may be any bit in the PHR except the bit for indicating whether power headroom information of one or more serving cells is contained in the PHR.

Note that, in the embodiment of the disclosure, the meaning of different bit values may be flexibly set according to practical requirements, but is not limited to the way of setting the bit value described in the embodiment of the disclosure.

As shown in Fig. 6, the basic processing flow of another method for providing a PHR according to an embodiment of the disclosure includes the following acts.

At act S201, a UE receives configuration information of serving cells.

Specifically, the UE receives and saves the configuration information of the serving cells supported by the UE. The information may be sent by the eNB and may be carried in the RRC message.

At act S202, a length of a first region of a PHR is determined according to the configuration information of the serving cells.

Specifically, the UE determines the length of the first region of the PHR according to indication information in the configuration information of the serving cells. As an alternative, the UE determines the length of the first region according to the number of secondary serving cells having an uplink resource and configured in the configuration information of the serving cells, for example, the length of the first region is equal to the number of the secondary serving cells having an uplink resource and configured by the UE.

The serving cell configured with a PUCCH is determined as a serving cell of which power headroom information has to be reported according to the configuration information of the serving cells. Or, a serving cell that cannot be deactivated and has uplink resource configuration is determined as a serving cell of which power headroom information has to be reported according to the configuration information of the serving cells. Or, at least one serving cell of which power headroom information has to be reported is determined according to 3GPP 36-series protocol agreements; in such a case, when the length of the first region is calculated, the number of the SCells having no need to be indicated by the first region should be subtracted.

The first region may be located starting from the first bit in the PHR, and is used for indicating whether power headroom information of one or more serving cells is contained in the PHR. Each bit in the first region is used for indicating whether power headroom information of one serving cell is contained in the PHR. A total number of bits of the first region is less than a maximum number of serving cells which are able to be simultaneously configured by the UE.

### First embodiment

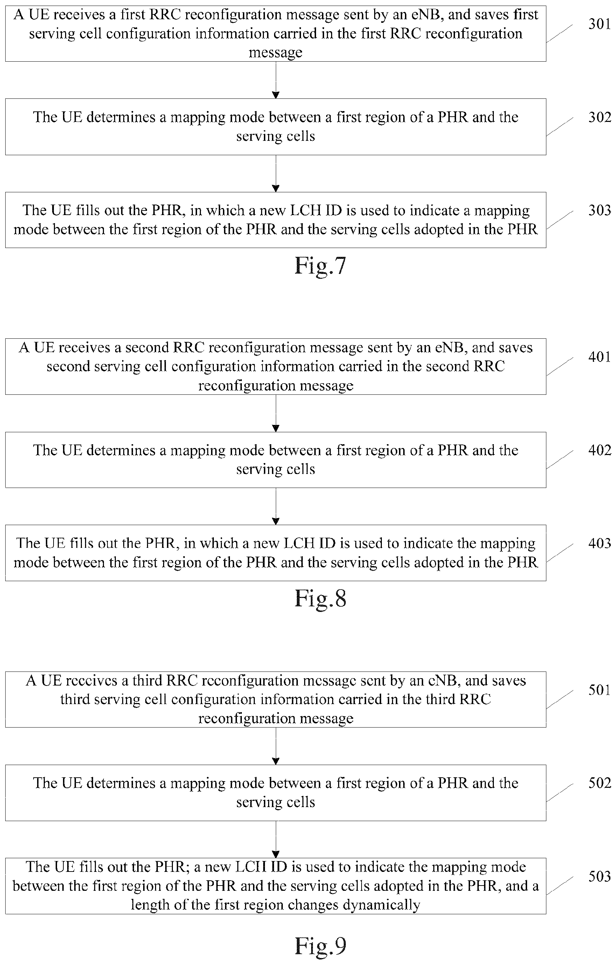

As shown in Fig. 7, a detailed processing flow of a method for providing a PHR according to a first embodiment of the disclosure includes the following acts.

At act S301, a UE receives a first RRC reconfiguration message sent by an eNB, and saves first serving cell configuration information carried in the first RRC reconfiguration message.

Specifically, in the first embodiment of the disclosure, there are 10 serving cells configured in the first RRC reconfiguration message. The first serving cell is the PCell, and the cells from the second serving cell to the tenth serving cell are the SCells. The SCell indexes corresponding to the cells from the second serving cell to the tenth serving cell is 1-9, and the SCells whose SCell indexes are 1/3/5/7/9 are configured with an uplink resource.

At act S302, the UE determines a mapping mode between a first region of a PHR and the serving cells.

Specifically, the UE determines the mapping mode between the first region of the PHR and the serving cells according to the relationship between a first threshold and the number of the serving cells configured in the configuration information of the serving cells.

Here, because the maximum number of the cells that the existing protocol can support is 7, the first threshold is set as 7. When the number of the configured serving cells is greater than the first threshold, the mapping mode between the first region of the PHR and the serving cells is determined as: there is a corresponding relationship between the bits in the first region and a part of serving cells. The first bit, the second bit, the third bit, the fourth bit and the fifth bit in the first region correspond to the cells whose SCell indexes are 1/3/5/7/9 respectively.

The first region is used for indicating whether power headroom information of one or more serving cells is contained in the PHR; and each bit in the first region is used for indicating whether the power headroom of a serving cell is contained in the PHR.

At act S303, the UE fills out the PHR, in which a new LCH ID is used to indicate the mapping mode between the first region of the PHR and the serving cells adopted in the PHR.

Here, the new LCH ID is LCH ID 10111. The format of the PHR corresponding to LCH ID 10111 is consistent with the extended PHR, but the adopted mapping mode between the first region of the PHR and the serving cells is different.

### Second embodiment

As shown in Fig. 8, a detailed processing flow of a method for providing a PHR according to a second embodiment of the disclosure includes the following acts.

At act S401, a UE receives a second RRC reconfiguration message sent by an eNB, and saves second serving cell configuration information carried in the second RRC reconfiguration message.

Specifically, in the second embodiment of the disclosure, there are 10 serving cells configured in the second RRC reconfiguration message. The first serving cell is the PCell, and the cells from the second serving cell to the tenth serving cell are the SCells. The SCell indexes corresponding to the cells from the second serving cell to the tenth serving cell is 1-9. The SCells whose SCell indexes are 1/3/5/7/9 are configured with an uplink resource, and the SCell whose SCell index is 5 is configured with a PUCCH.

At act S402, the UE determines a mapping mode between a first region of a PHR and the serving cells.

Specifically, the UE determines the mapping mode between the first region of the PHR and the serving cells according to the relationship between a first threshold and the number of the serving cells configured in the configuration information of the serving cells.

Here, because the maximum number of the cells that the existing protocol can support is 7, the first threshold is set as 7. When the number of the configured serving cells is greater than the first threshold, the mapping mode between the first region of the PHR and the serving cells is determined as: there is a corresponding relationship between the bits in the first region and a part of serving cells. Because the cell configured with a PUCCH is a serving cell of which power headroom information has to be reported, there is no need to indicate whether power headroom information of this cell is contained in the PHR, and the first bit, the second bit, the third bit and the fourth bit in the first region correspond to the cells whose SCell indexes are 1/3/7/9 respectively.

The first region is used for indicating whether power headroom information of one or more serving cells is contained in the PHR. Each bit in the first region is used for indicating whether the power headroom of a serving cell is contained in the PHR.

At act S403, the UE fills out the PHR, in which a new LCH ID is used to indicate the mapping mode between the first region of the PHR and the serving cells adopted in the PHR.

Here, the new LCH ID is LCH ID 10111. The format of the PHR corresponding to LCH ID 10111 is consistent with the extended PHR, but the adopted mapping mode between the first region of the PHR and the serving cells is different.

### Third embodiment

As shown in Fig. 9, a detailed processing flow of a method for providing a PHR according to a third embodiment of the disclosure includes the following acts.

At act S501, a UE receives a third RRC reconfiguration message sent by an eNB, and saves third serving cell configuration information carried in the third RRC reconfiguration message.

Specifically, in the third embodiment of the disclosure, there are 20 serving cells configured in the third RRC reconfiguration message. The first serving cell is the PCell, and the cells from the second serving cell to the twentieth serving cell are the SCells. The SCell indexes corresponding to the cells from the second serving cell to the twentieth serving cell is 1-19. The SCells whose SCell indexes are 1/3/5/7/9/11/13/15/17/19 are configured with an uplink resource, and the SCell whose SCell index is 5 is configured with a PUCCH.

At act S502, the UE determines a mapping mode between a first region of a PHR and the serving cells.

Specifically, the UE determines the mapping mode between the first region of the PHR and the serving cells according to the relationship between a first threshold and the number of the serving cells configured in the configuration information of the serving cells.

Here, because the maximum number of the cells that the existing protocol can support is 7, the first threshold is set as 7. When the number of the configured serving cells is greater than the first threshold, the mapping mode between the first region of the PHR and the serving cells is determined as: there is a corresponding relationship between the bits in the first region and a part of serving cells. The bits from the first bit to the tenth bit in the first region correspond to the cells whose SCell indexes are 1/3/5/7/9/11/13/15/17/19 respectively.

The first region is used for indicating whether power headroom information of one or more serving cells is contained in the PHR. Each bit in the first region is used for indicating whether the power headroom of a serving cell is contained in the PHR.

At act S503, the UE fills out the PHR, in which a new LCH ID is used to indicate the mapping mode between the first region of the PHR and the serving cells adopted in the PHR, and the length of the first region changes dynamically.

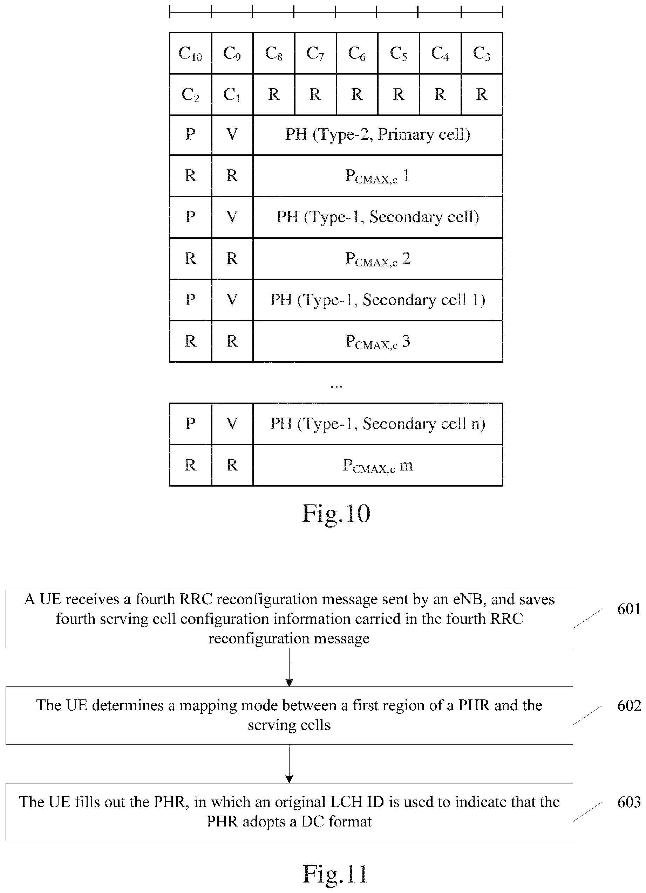

Here, the new LCH ID is LCH ID 10111. The format of the PHR corresponding to LCH ID 10111 is consistent with the extended PHR, but the adopted mapping mode between the first region of the PHR and the serving cells is different. In such a case, the format of the PHR is shown in Fig. 10. The bits from the first bit to the tenth bit correspond to the cells whose SCell indexes are 1/3/5/7/9/11/13/15/17/19 respectively.

### Fourth embodiment

As shown in Fig. 11, a detailed processing flow of a method for providing a PHR according to a fourth embodiment of the disclosure includes the following acts.

At act S601, a UE receives a fourth RRC reconfiguration message sent by an eNB, and saves fourth serving cell configuration information carried in the fourth RRC reconfiguration message.

Specifically, in the fourth embodiment of the disclosure, there are 5 serving cells configured in the fourth RRC reconfiguration message. The first serving cell is the PCell, and the cells from the second serving cell to the fifth serving cell are the SCells. The SCell indexes corresponding to the cells from the second serving cell to the fifth serving cell is 1-4. The SCells whose SCell indexes are 1/2/4 are configured with an uplink resource. The RRC reconfiguration message specifies that the UE adopts a new reporting format of the PHR of the DC, and adopts a new way of filling in the first region.

In the new reporting format, the ith bit of the first region in the PHR indicates whether the power headroom of the serving cell, the SCell index of which is i in an ascending order, having an uplink resource exists.

At act S602, the UE determines a mapping mode between a first region of a PHR and the serving cells.

Specifically, the UE specifies the reporting format of the PHR according to the RRC reconfiguration message. The first bit, the second bit and the third bit in the first region correspond to the cell whose SCell indexes are 1/2/4 respectively.

At act S603, the UE fills out the PHR, in which an original LCH ID is used to indicate that the PHR adopts a DC format.

Here, the bit value for indicating the mapping mode between the first region of the PHR and the serving cells in the PHR is modified.

### Fifth embodiment

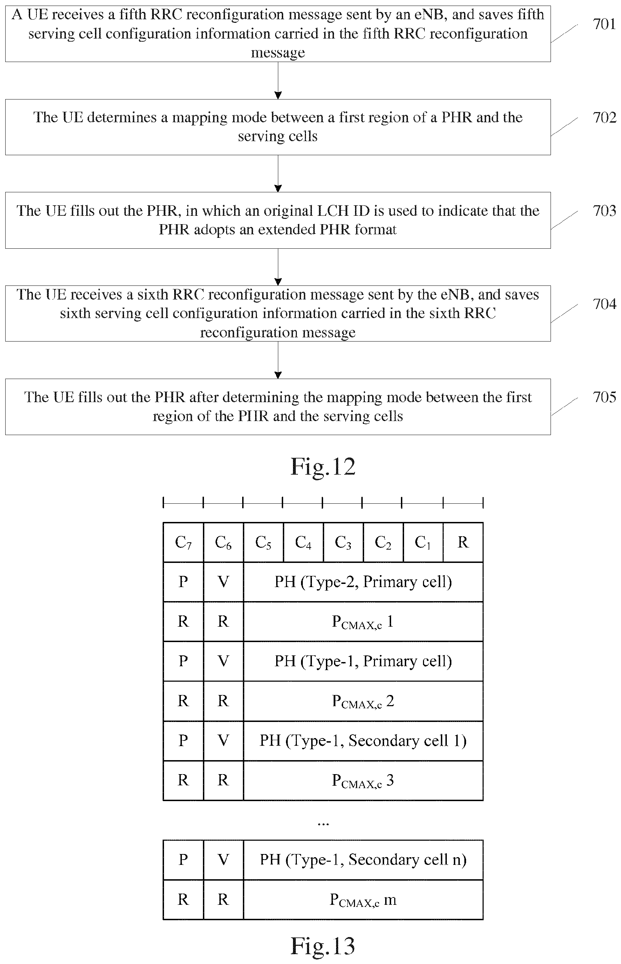

As shown in Fig. 12, a detailed processing flow of a method for providing a PHR according to a fifth embodiment of the disclosure includes the following acts.

At act S701, a UE receives a fifth RRC reconfiguration message sent by an eNB, and saves fifth serving cell configuration information carried in the fifth RRC reconfiguration message.

Specifically, in the fifth embodiment of the disclosure, there are 10 serving cells configured in the fifth RRC reconfiguration message. The first serving cell is the PCell, and the cells from the second serving cell to the tenth serving cell are the SCells. The SCell indexes corresponding to the cells from the second serving cell to the tenth serving cell is 1-9. The SCells whose SCell indexes are 1/3/5/7/9 are configured with an uplink resource.

At act S702, the UE determines a mapping mode between a first region of a PHR and the serving cells.

Specifically, the UE determines the mapping mode between the first region of the PHR and the serving cells according to the relationship between a first threshold and the number of the serving cells configured in the configuration information of the serving cells.

Here, because the maximum number of the cells that the existing protocol can support is 7, the first threshold is set as 7. When the number of the configured serving cells is greater than the first threshold, the mapping mode between the first region of the PHR and the serving cells is determined as: there is a corresponding relationship between the bits in the first region and a part of serving cells. The first bit, the second bit, the third bit, the fourth bit and the fifth bit in the first region correspond to the cells whose SCell indexes are 1/3/5/7/9 respectively.

The first region is used for indicating whether power headroom information of one or more serving cells is contained in the PHR. Each bit in the first region is used for indicating whether the power headroom of a serving cell is contained in the PHR.

At act S703, the UE fills out the PHR, in which an original LCH ID is used to indicate that the PHR adopts an extended PHR format. In such a case, the format of the PHR is shown in Fig. 13.

Here, the bit value indicating the mapping mode adopted by the first region and indicated in the PHR is set as 0, as the R value at the first line, the last column in Fig. 13.

At act S704, the UE receives a sixth RRC reconfiguration message sent by the eNB, and saves sixth serving cell configuration information carried in the sixth RRC reconfiguration message.

Here, the sixth RRC reconfiguration message indicates the UE to delete the serving cell whose SCell indexes are 5/6/7/8/9, but only reserve the serving cells whose SCell indexes are 1/2/3/4.

At act S705: the UE fills out the PHR after determining the mapping mode between the first region of the PHR and the serving cells.

Specifically, the UE determines the mapping mode between the first region of the PHR and the serving cells according to the relationship between the first threshold and the number of the serving cells configured in the configuration information of the serving cells.

Here, the first threshold is set as 7 according to the protocol. If the number of the configured serving cells is less than the first threshold, the traditional mapping mode is adopted. In the present instance, because the mapping mode between the first region of the PHR and the serving cells changes, the UE modifies the bit value indicating the mapping mode between the first region of the PHR and the serving cells.

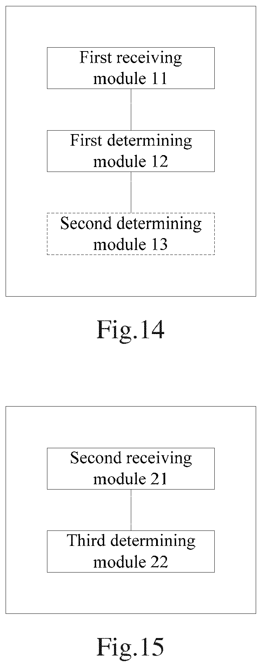

For implementing the method for providing a PHR, the embodiment of the disclosure also provides a device for providing a PHR. As shown in Fig. 14, the structure of the device includes: a first receiving module 11 and a first determining module 12.

The first receiving module 11 is configured to receive the configuration information of the serving cells.

The first determining module 12 is configured to determine the corresponding relationship between the first region of the PHR and the serving cells according to the configuration information of the serving cells, and the first region is used for indicating whether power headroom information of one or more serving cells is contained in the PHR.

In the above implementation solution, the first region may be located starting from the first bit in the PHR, and each bit in the first region is used for indicating whether power headroom information of one serving cell is contained in the PHR. A total number of bits of the first region is less than a maximum number of serving cells which are able to be simultaneously configured by the UE.

In the above implementation solution, the device may further include: a second determining module 13, which is configured to determine at least one serving cell of which power headroom information has to be reported. Correspondingly, after at least one serving cell of which power headroom information has to be reported is determined, the first region does not carry the power headroom information of at least one serving cell of which power headroom information has to be reported.

In the above implementation solution, the configuration information of the serving cells is carried in the RRC message.

The second determining module 13 is configured to determine the at least one serving cell of which the power headroom information has to be reported according to the RRC message. Or, the second determining module 13 is configured to determine, according to the configuration information of the serving cells, a serving cell configured with a PUCCH to be a serving cell of which power headroom information has to be reported. Or, the second determining module 13 is configured to determine, according to the configuration information of the serving cells, a serving cell that cannot be deactivated and has uplink resource configuration to be a serving cell of which power headroom information has to be reported. Or, the second determining module 13 is configured to determine the at least one serving cell of which the power headroom information has to be reported according to 3GPP 36-series protocol agreements.

In the above implementation solution, the uplink resource configuration may include any one or any combination of parameters including: the relevant parameters of the PUSCH, the relevant parameters of uplink power control, the relevant parameters of the sounding RS, the relevant parameters reported by the CQI and the relevant parameters of the PUCCH.

In the above implementation solution, the first determining module 12 may be configured to determine a mapping mode between the first region of the PHR and the serving cells according to the configuration information of the serving cells, and determine the corresponding relationship between the first region of the PHR and the serving cells according to the determined mapping mode.

In the above implementation solution, the first determining module 12 may be configured to determine the mapping mode between the first region of the PHR and the serving cells according to the explicit indication information in the configuration information of the serving cells. Or, the first determining module 12 may be configured to determine the mapping mode between the first region of the PHR and the serving cells according to the relationship between a first threshold and the number of the serving cells configured in the configuration information of the serving cells. Or, the first determining module 12 may be configured to determine the mapping mode between the first region of the PHR and the serving cells according to the relationship between a second threshold and the number of serving cells having an uplink resource and configured in the configuration information of the serving cells.

In the above implementation solution, a bit in the PHR is used for indicating the mapping mode between the first region of the PHR and the serving cells; and/or, a bit in the PHR is used for indicating whether a mapping mode between the first region of the PHR and the serving cells changes.

In the above implementation solution, each bit in the first region is used for indicating whether power headroom information of one serving cell is contained in the PHR. A total number of bits of the first region is less than a maximum number of serving cells which are able to be simultaneously configured by the UE. The length of the first region, namely the total number of bits of the first region, may be a fixed length, or changes according to the number of serving cells having an uplink resource and configured by the UE, or is configured by the eNB and notified to the UE through the RRC message.

In the above implementation solution, there are two mapping modes between the first region of the PHR and the serving cells. One is a traditional mapping mode, that is, each bit in the first region corresponds to all the SCells one by one. The other is a new mapping mode in the embodiment of the disclosure, namely the mapping mode, in which there is a corresponding relationship between the bits in the first region and a part of serving cells, determined according to the number of the serving cells actually configured. The mapping mode may be determined according to the number of the serving cells actually configured in manners described as follows. For example, when the explicit indication information in the configuration information of the serving cells indicates the new mapping mode, the mapping mode between the first region of the PHR and the serving cells is determined to adopt the new mapping mode. For example, when the number of the serving cells configured in the configuration information of the serving cells is greater than the first threshold, the mapping mode between the first region of the PHR and the serving cells is determined to adopt the new mapping mode. For example, when the number of serving cells having an uplink resource and configured in the configuration information of the serving cells is greater than the second threshold, the mapping mode between the first region of the PHR and the serving cells is determined to adopt the new mapping mode. Because the maximum number of the cells that the existing protocol can support is 7, the first threshold and the second threshold may be set as 7. If the value of a bit in the first region is 0, the headroom report of the serving cell corresponding to the bit does not exist in the PHR; if the value of a bit in the first region is 1, the power headroom information of the serving cell corresponding to the bit is contained in the PHR. Whether the power headroom information of the serving cell is contained in the PHR is indicated for the serving cell corresponding to the bit in the first region according to an ascending order or a descending order of the SCell index.

The embodiment of the disclosure also provides another device for providing a PHR. As shown in Fig. 15, the structure of the device includes: a second receiving module 21 and a third determining module 22.

The second receiving module 22 is configured to receive configuration information of serving cells supported by a UE.

The third determining module 23 is configured to determine a length of a first region of a PHR according to the configuration information of the serving cells. The first region is used for indicating whether power headroom information of one or more serving cells is contained in the PHR.

In the above implementation solution, the third determining module 22 is configured to determine the length of the first region of the PHR according to the indication information in the configuration information of the serving cells. Or, the third determining module 22 is configured to determine the length of the first region of the PHR according to the number of secondary serving cells having an uplink resource and configured in the configuration information of the serving cells, for example, the length of the first region is equal to the number of the secondary serving cells having an uplink resource and configured by the UE.

In the above implementation solution, a serving cell configured with a PUCCH may be determined as a serving cell of which power headroom information has to be reported according to the configuration information of the serving cells. Or, a serving cell that cannot be deactivated and has uplink resource configuration may be determined as a serving cell of which power headroom information has to be reported according to the configuration information of the serving cells. Or, the at least one serving cell of which power headroom information has to be reported may be determined according to 3GPP 36-series protocol agreements. When the length of the first region is calculated, the number of the SCells having no need to be indicated by the first region should be subtracted.

In the above implementation solution, the first region may be located starting from the first bit in the PHR, and is used for indicating whether power headroom information of one or more serving cells is contained in the PHR. Each bit in the first region is used for indicating whether power headroom information of one serving cell is contained in the PHR. A total number of bits of the first region is less than a maximum number of serving cells which are able to be simultaneously configured by the UE.

The device for providing a PHR in the embodiment of the disclosure may be realized by the UE.

The first receiving module 11, the first determining module 12, the second determining module 13, the second receiving module 21 and the third determining module 22 in the device for providing a PHR of the disclosure may be realized by a processor, and certainly may also be realized by a specific logical circuit. The processor may be a processor on a UE. In practical applications, the processor may be a Central Processing Unit (CPU), a Micro Processor Unit (MPU), a Digital Signal Processor (DSP) or a Field Programmable Gate Array (FPGA).

In the embodiment of the disclosure, if the method for providing a PHR is implemented by software function modules, and the software function modules may be sold or used as independent products, they can also be stored in a computer readable storage medium. Based on this understanding, the technical solutions in the embodiments of the disclosure substantially or the part making a contribution to the related technology may be embodied in the form of software product; the computer software product is stored in a storage medium and includes a number of instructions to make a computer device (which may be a personal computer, a server or a network device, etc.) perform all or part of the method in each embodiment of the disclosure. The above storage medium includes: a USB flash disk, a mobile hard disk, an ROM, a magnetic disk or a compact disc, and other media which can store program codes. In this way, the disclosure is not limited to any particular combination of hardware and software.

Correspondingly, the embodiment of the disclosure also provides a computer storage medium, which stores a computer executable instruction used for performing the method for providing a PHR.

The above is only the exemplary embodiments of the disclosure and not intended to limit the scope of protection of the disclosure.

## Claims

1. A method for providing a Power Headroom Report, PHR, comprising:
receiving, by a User Equipment, UE, configuration information of serving cells;
determining a corresponding relationship between a first region of a PHR and the serving cells according to the configuration information of the serving cells,
wherein the first region is used for indicating whether power headroom information of one or more serving cells is contained in the PHR.

2. The method for providing a PHR as claimed in claim 1, wherein each bit in the first region is used for indicating whether power headroom information of one serving cell is contained in the PHR; a total number of bits of the first region is less than a maximum number of serving cells which are able to be simultaneously configured by the UE.

3. The method for providing a PHR as claimed in claim 1 or 2, wherein before determining the corresponding relationship between the first region of the PHR and the serving cells, the method further comprises: determining at least one serving cell of which power headroom information has to be reported;
correspondingly, after determining the at least one serving cell of which the power headroom information has to be reported, the first region does not carry the power headroom information of the at least one serving cell of which the power headroom information has to be reported.

4. The method for providing a PHR as claimed in claim 3, wherein the configuration information of the serving cells is carried in a Radio Resource Control, RRC, message; correspondingly, determining the at least one serving cell of which the power headroom information has to be reported comprises:
determining the at least one serving cell of which the power headroom information has to be reported according to the RRC message; or,
determining, according to the configuration information of the serving cells, a serving cell configured with a Physical Uplink Control Channel, PUCCH, to be a serving cell of which power headroom information has to be reported; or,
determining, according to the configuration information of the serving cells, a serving cell that cannot be deactivated and has uplink resource configuration to be a serving cell of which power headroom information has to be reported; or,
determining, according to 3rd Generation Partner Project, 3GPP, 36-series protocol agreements, the at least one serving cell of which the power headroom information has to be reported.

5. The method for providing a PHR as claimed in claim 4, wherein the uplink resource configuration comprises any one or any combination of parameters comprising: relevant parameters of a Physical Uplink Shared Channel, PUSCH, relevant parameters of uplink power control, relevant parameters of a sounding Reference Signal, RS, relevant parameters reported by a Channel Quality Indicator, CQI, and relevant parameters of the PUCCH.

6. The method for providing a PHR as claimed in claim 1 or 2, wherein determining the corresponding relationship between the first region of the PHR and the serving cells according to the configuration information of the serving cells comprises:
determining a mapping mode between the first region of the PHR and the serving cells according to the configuration information of the serving cells, and determining the corresponding relationship between the first region of the PHR and the serving cells according to the determined mapping mode.

7. The method for providing a PHR as claimed in claim 6, wherein determining the mapping mode between the first region of the PHR and the serving cells according to the configuration information of the serving cells comprises:
determining the mapping mode between the first region of the PHR and the serving cells according to explicit indication information in the configuration information of the serving cells; or,
determining the mapping mode between the first region of the PHR and the serving cells according to a relationship between a first threshold and the number of the serving cells configured in the configuration information of the serving cells; or,
determining the mapping mode between the first region of the PHR and the serving cells according to a relationship between a second threshold and the number of serving cells having an uplink resource and configured in the configuration information of the serving cells.

8. The method for providing a PHR as claimed in claim 1 or 2, wherein the PHR is also used for indicating at least one of: a mapping mode between the first region of the PHR and the serving cells; whether a mapping mode between the first region of the PHR and the serving cells changes.

9. A device for providing a Power Headroom Report, PHR, comprising: a first receiving module and a first determining module; wherein,
the first receiving module is configured to receive configuration information of serving cells supported by a User Equipment, UE; and
the first determining module is configured to determine a corresponding relationship between a first region of a PHR and the serving cells according to the configuration information of the serving cells, wherein the first region is used for indicating whether power headroom information of one or more serving cells is contained in the PHR.

10. The device for providing a PHR as claimed in claim 9, wherein each bit in the first region is used for indicating whether power headroom information of one serving cell is contained in the PHR; a total number of bits of the first region is less than a maximum number of serving cells which are able to be simultaneously configured by the UE.

11. The device for providing a PHR as claimed in claim 9 or 10, further comprising: a second determining module, which is configured to determine at least one serving cell of which power headroom information has to be reported;
correspondingly, after determining the at least one serving cell of which the power headroom information has to be reported, the first region does not carry the power headroom information of the at least one serving cell of which the power headroom information has to be reported.

12. The device for providing a PHR as claimed in claim 11, wherein the configuration information of the serving cells is carried in a Radio Resource Control, RRC, message; correspondingly,
the second determining module is configured to determine the at least one serving cell of which the power headroom information has to be reported according to the RRC message, or
the second determining module is configured to determine, according to the configuration information of the serving cells, a serving cell configured with a Physical Uplink Control Channel, PUCCH, to be a serving cell of which power headroom information has to be reported, or
the second determining module is configured to determine, according to the configuration information of the serving cells, a serving cell that cannot be deactivated and has uplink resource configuration to be a serving cell of which power headroom information has to be reported, or
the second determining module is configured to determine, according to 3rd Generation Partner Project, 3GPP, 36-series protocol agreements, the at least one serving cell of which the power headroom information has to be reported.

13. The device for providing a PHR as claimed in claim 12, wherein uplink resource configuration comprises any one or any combination of parameters comprising: relevant parameters of a Physical Uplink Shared Channel, PUSCH, relevant parameters of uplink power control, relevant parameters of a sounding Reference Signal, RS, relevant parameters reported by a Channel Quality Indicator, CQI, and relevant parameters of the PUCCH.

14. The device for providing a PHR as claimed in claim 9 or 10, wherein the first determining module is configured to determine a mapping mode between the first region of the PHR and the serving cells according to the configuration information of the serving cells, and determine the corresponding relationship between the first region of the PHR and the serving cells according to the determined mapping mode.

15. The device for providing a PHR as claimed in claim 14, wherein the first determining module is configured to determine the mapping mode between the first region of the PHR and the serving cells according to explicit indication information in the configuration information of the serving cells, or
determine the mapping mode between the first region of the PHR and the serving cells according to a relationship between a first threshold and the number of the serving cells configured in the configuration information of the serving cells, or
determine the mapping mode between the first region of the PHR and the serving cells according to a relationship between a second threshold and the number of serving cells having an uplink resource and configured in the configuration information of the serving cells.

16. The device for providing a PHR as claimed in claim 9 or 10, wherein the PHR is also used for indicating a mapping mode between the first region of the PHR and the serving cells, and/or whether a mapping mode between the first region of the PHR and the serving cells changes.

17. A method for providing a Power Headroom Report, PHR, comprising:
receiving, by a User Equipment, UE, configuration information of serving cells;
determining a length of a first region of a PHR according to the configuration information of the serving cells,
wherein the first region is used for indicating whether power headroom information of one or more serving cells is contained in the PHR.

18. The method for providing a PHR as claimed in claim 17, wherein determining the length of the first region of the PHR according to the configuration information of the serving cells comprises:
determining the length of the first region of the PHR according to indication information in the configuration information of the serving cells; or,
determining the length of the first region of the PHR according to the number of secondary serving cells having an uplink resource and configured in the configuration information of the serving cells.

19. A device for providing a Power Headroom Report, PHR, comprising: a second receiving module and a third determining module; wherein,
the second receiving module is configured to receive configuration information of serving cells supported by a User Equipment, UE; and
the third determining module is configured to determine a length of a first region of a PHR according to the configuration information of the serving cells, wherein the first region is used for indicating whether power headroom information of one or more serving cells is contained in the PHR.

20. The device for providing a PHR as claimed in claim 19, wherein the third determining module is configured to determine the length of the first region of the PHR according to indication information in the configuration information of the serving cells, or
the third determining module is configured to determine the length of the first region of the PHR according to the number of secondary serving cells having an uplink resource and configured in the configuration information of the serving cells.

21. A computer storage medium, in which a computer executable instruction is stored, wherein the computer executable instruction is used for performing a method for providing a Power Headroom Report, PHR, as claimed in any one of claims 1 to 8.

22. A computer storage medium, in which a computer executable instruction is stored, wherein the computer executable instruction is used for performing a method for providing a Power Headroom Report, PHR, as claimed in claim 17 or 18.
